# EUROPEAN PATENT SPECIFICATION

(11) **EP 2 639 116 B1**
(45) Date of publication and mention of the grant of the patent: **06.08.2014**
(21) Application number: 12159100.2
(22) Date of filing: 12.03.2012
(51) Int. Cl.: B60R 21/235, B60R 21/36, B29C 49/04, B29C 49/48, B29C 49/42

(54) **Improvements in or relating to airbags**
Verbesserungen in oder im Zusammenhang mit Airbags
Améliorations de ou associées aux airbags

(43) Date of publication of application: 18.09.2013
(73) Proprietor: Autoliv Development AB, 447 83 Vårgårda (SE)
(72) Inventor: Magnusson, Ulf, SE-44157 Alingsås (SE)
(74) Representative: Parry, Simon James

(56) References cited:
- WO-A1-2008/047599
- GB-A- 2 410 918
- US-A- 2 522 079
- US-A- 5 044 663
- US-A1- 2006 261 579

## Description

The present invention relates to an airbag for a motor vehicle safety arrangement, and more particularly relates to such an airbag which is blow-moulded from plastics material. Other aspects of the invention relate to a method of packaging such an airbag.

It has been proposed previously to fabricate inflatable airbags for use in motor vehicle safety arrangements by creating a plastic envelope via a blow-moulding technique (for example injection blow moulding or extrusion blow moulding). In order to fabricate such an airbag, it has been proposed to blow-mould a parison of plastic material inside a metal mould having a shape conforming to the shape of the desired airbag in its uniflated condition. Typically such airbags are moulded so as to have thin wall sections and to have a generally flat configuration for convenient installation in the desired location in a motor vehicle.

Previously proposed blow-moulded airbags of the type mentioned above have generally been limited in their uses to safety arrangements such as pelvis-, foot-, or knee-bag arrangements intended to deploy in order to provide protection to the pelvis, feet, or knee areas of an occupant of the vehicle. Plastic blow-moulded airbags are suitable for such arrangements because the airbags do not need to be very large when inflated and can thus be easily accommodated in their relatively thin uninflated configurations within the interior trim or seat upholstery of a vehicle.

Problems have been found to arise when trying to use plastic blow-moulded airbags in safety arrangements requiring larger airbags such as, for example, inflatable side curtains of a type intended to deploy downwardly from the roof lining of a motor vehicle inside the side windows, or pedestrian airbags intended to deploy over or across the windscreen of a motor vehicle in order to provide protection to a pedestrian or cyclist in the event of impact with the motor vehicle. Such large airbags are generally much more difficult to package tightly in the motor vehicle in their uninflated condition, and plastic blow-moulded airbags do not lend themselves conveniently to such tight packaging. Woven fabric airbags are thus still preferred for such arrangements due to the fact that they can be rolled and/or folded very tightly for packaging.

Another problem which has been found with relatively large blow-moulded plastic airbags is that it can often be difficult to control their inflation so as to limit the depth of the airbag. In many applications such as inflatable curtains or passenger airbags, it is disadvantageous for the airbag to "balloon" upon inflation so as to develop with very significant thickness.

However, were it not for the above-mentioned disadvantages, plastic blow-moulded airbags could be considered to offer advantages to such types of safety arrangements due to the manner in which they plastically deform upon inflation from their initial flat configurations. In both the side curtain arrangement, and the pedestrian airbag arrangement, it is advantageous for the airbag to maintain its inflated configuration for a relatively long time after initial deployment (due to the nature of typical accidents necessitating their deployment). Plastic airbags can be advantageous in this respect due to their self-supporting properties following inflation, and the way in which they plastically deform when struck by a vehicle occupant or pedestrian, absorbing impact energy with reduced risk of rebound. Document US 5044663 A discloses a blow-moulded thermoplastic air bag having an encapsulated fabric reinforcement pad with tethers.

It is a preferred object of the present invention to provide an improved airbag for a motor vehicle safety arrangement.

According to the present invention, there is provided an airbag for a motor vehicle safety arrangement, the airbag being blow-moulded from plastics material to form an envelope defining an inflatable volume for the receipt of inflating gas between at least two opposed layers of said plastics material, the envelope having a restraint formed integrally from said plastics material and extending across said inflatable volume between said opposed layers, the restraint being configured to restrain movement of said layers apart from one another in the region of the restraint upon inflation of the airbag.

Preferably, said restraint comprises a first recess formed in the plastic material of one of said layers and a second recess formed in the plastic material of the other said layer, the recesses each extending inwardly of the envelope towards one another.

Advantageously, each said recess is substantially circular in transverse cross section.

Conveniently, each said recess is tapered so as to narrow towards the centre of the envelope.

Preferably, each said recess is substantially frustoconical in shape.

Advantageously, each said recess is substantially trumpet-shaped.

Conveniently, said recesses are both blind recesses, and are separated from one another by a region of said plastics material.

Preferably, said restraint defines a passage extending through said envelope between said layers.

Advantageously, said recesses are interconnected to define respective regions of said passage.

Conveniently, the airbag has a plurality of said restraints in spaced apart relation to one another.

Preferably, the airbag is provided in the form of a pedestrian airbag arranged for deployment over or across at least part of the windscreen of a motor vehicle.

Advantageously, the airbag is mounted beneath the rear part of the hood or bonnet of the motor vehicle.

Conveniently, the airbag is provided in the form of a package having at least one roll or fold formed in the airbag.

Advantageously, said package has a plurality of folds formed in the plastic material of the envelope.

Preferably, the airbag is provided in the form of a package having a plurality of folds formed in the airbag, wherein none of said folds extend through a said restraint.

Advantageously, said plurality of folds includes a series of zig-zag folds.

Conveniently, said package includes a sub-package comprising said zig-zag folds.

Preferably, the airbag is provided in fluid communication with an inflator actuable to supply a flow of inflating gas to said inflatable volume to inflate the airbag, wherein said package is configured such that said sub-package is located generally adjacent the inflator prior to actuation of the inflator and is arranged to move pivotally away from said inflator during inflation of the airbag.

Advantageously, said package includes a fold about which said pivotal movement of the sub-package occurs during inflation of the airbag.

Conveniently, said package is configured such that during inflation of the airbag, said sub-package moves pivotally away from the inflator before significant unfolding of its zig-zag folds.

Preferably, the airbag is arranged such that said pivotal movement of the sub-package away from the inflator occurs about an axis located in the region of the rear edge of the hood or bonnet.

Advantageously, said axis is arranged substantially transversely relative to the vehicle.

Conveniently, said axis is defined by said fold, the fold being oriented substantially transversely relative to the vehicle.

Preferably, the airbag is formed into said package via a packaging method involving the evacuation of the envelope prior to the creation of said rolls or folds.

Advantageously, said packaging method involves the application of heat to the plastics material of the envelope during said evacuation and/or folding/rolling steps.

So that the invention may be more readily understood, and so that further features thereof may be appreciated, embodiments of the invention will now be described by way of example with reference to the accompanying drawings in which:
Figure 1 is a schematic illustration showing a pedestrian airbag in accordance with an embodiment of the present invention in a deployed configuration in which it extends across the windscreen of a motor vehicle;
Figure 2 is a plan view from above of the airbag;
Figure 3 is part section, part phantom perspective view of the airbag, prior to packaging;
Figure 4 is a cross-sectional view through part of the airbag, taken along line IV-IV in figure 3;
Figure 5 is a view similar to that of figure 4, showing the airbag in an inflated configuration;
Figure 6 is a view similar to that of figure 4, depicting an airbag in accordance with another embodiment;
Figure 7 is a view similar to that of figure 4, depicting an airbag in accordance with a further embodiment;
Figure 8 is a view similar to that of figure 7, showing an airbag in accordance with another alternative embodiment;
Figure 9 is a cross-sectional view taken through the entire airbag, taken along line IX-IX in figure 3;
Figure 10 is a view similar to that of figure 9, but which shows the airbag after a first packaging step;
Figure 11 is a view similar to that of figure 10, but which shows the airbag being folded during a subsequent packaging step;
Figure 12 is a view similar to that of figure 11, showing the airbag after further folding during packaging;
Figure 13 is a view similar to that of figure 12, showing the airbag after still further folding;
Figure 14 is a view similar to that of figure 13, showing the airbag in a near-fully-folded configuration;
Figure 15 is a view similar to that of figure 14, showing the airbag in a fully folded and packaged configuration;
Figure 16 is a schematic cross-sectional illustration, showing the packaged airbag mounted beneath the hood of a motor vehicle immediately prior to deployment of the airbag;
Figure 17 is a view similar to that of figure 16, showing the airbag during an initial deployment stage;
Figure 18 is a view similar to that of figure 17, showing the airbag unfolding during a further deployment stage; and
Figure 19 is a view similar to that of figure 18, showing the airbag further unfolded during a subsequent deployment stage, immediately prior to development of the airbag over the windscreen of the motor vehicle.

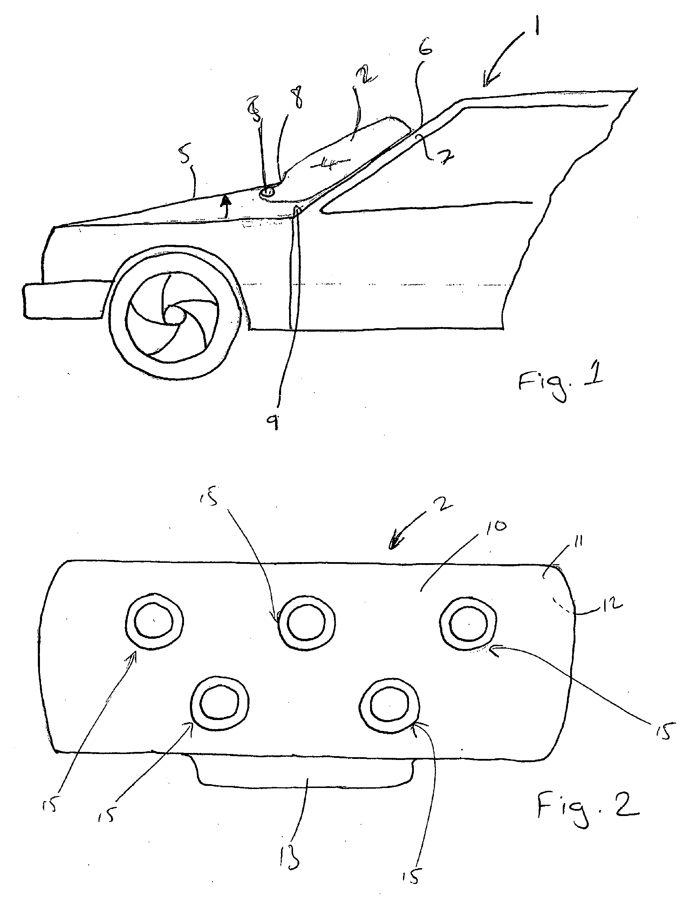

Turning now to consider the drawings in more detail, figure 1 illustrates a motor vehicle 1 fitted with a pedestrian safety arrangement incorporating an airbag 2 in accordance with the present invention. The airbag 1 is shown in an inflated condition following actuation of an inflator 3, such as a gas generator, provided in fluid communication with the inflatable volume 4 of the airbag 1. The rear of the vehicle's hood or bonnet 5 (hereinafter referred to simply as "hood") is lifted, for example by another airbag, a piston or other lifting arrangement (not shown), to allow sufficient space for the airbag 2 to inflate so that it deploys in a manner effective to cover at least part of the windscreen 6 and the adjacent A-pillars 7of the motor vehicle, thereby cushioning the impact of a pedestrian with these parts of the vehicle 1.

As will be noted, in the arrangement of figure 1, the inflator 3 is mounted to the underside of the hood 5, slightly forward of the rear edge 8 of the hood. However, in other embodiments it is envisaged that the inflator 3 could instead be mounted to the structure of the vehicle beneath the hood 5, slightly forward of the scuttle area 9 at the foot of the windscreen.

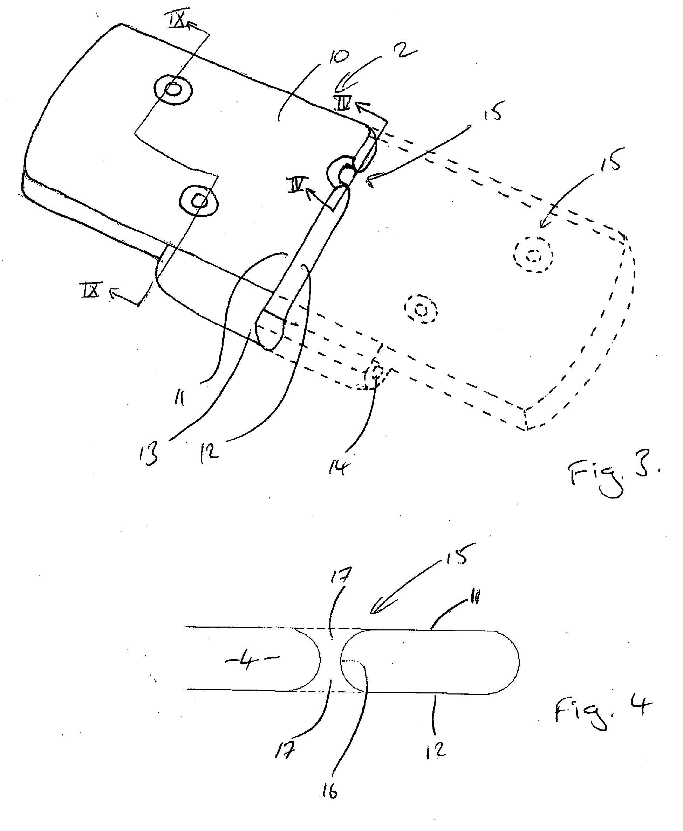

Figures 2 and 3 illustrate the configuration of an airbag 2 in accordance with the present invention in more detail. It is to be appreciated that rather than being formed of woven fabric material, the airbag 2 is blow-moulded from plastics material. The preferred plastics material may incorporate, at least as a substantial component polyamide (PA), polybutylene terephthalate (PBT), polyphenylene sufide (PPS), thermoplastic elastomers or polyolefin materials. These materials are considered particular suitable because they can be conveniently blow-moulded, and also because they can withstand significant pressure loadings at extremes of temperature over the range of -40°C to 110°C, which is important for an airbag which is intended to deploy over the outside of a vehicle. The airbag 2 comprises a unitary body which is extruded and then blow-moulded from the chosen plastics material. More particularly, the preferred method for blow-moulding the airbag 2 involves extrusion of the chosen plastics material, in a molten form to create a parison which is then inserted into an appropriately shaped mould. The plastics material of the parison is then blow moulded in the mould. The mould is shaped so as to produce directly the airbag shown in figures 2 and 3, without the need for any subsequent processing of the airbag, or with a need for only minimal further processing, such as the simple cutting of a hole for the inflator.

Figures 2 and 3 thus show the airbag 2 in the configuration it has upon removal from the mould, prior to any further packaging steps, and also prior to inflation. As will be noted from figures 2 and 3, the airbag 2 has a generally rectangular inflatable envelope 10 defining the inflatable volume 4 of the airbag between a pair of opposed layers 11, 12 of the plastics material which are spaced apart across the thickness of the blow moulded airbag. Connected to one side of the inflatable envelope 10, the airbag comprises an integral chamber 13 which is sized and configured to receive the inflator 3. It is envisaged that in preferred embodiments the inflator will be of generally cylindrical form. The chamber 13 may be provided with an access aperture 14 provided at one end thereof through which the inflator may be mounted in position in a known manner. The inflator 3 itself may seal the aperture 14, or the aperture 14 may be sealed in some other manner.

The inflatable envelope 10 of airbag 2 is provided with a number of restraints at spaced apart positions across the rectangular extent of the envelope. Figures 3 and 4 illustrate the configuration of one of the restraints 15 in detail, it being noted that all of the restraints 15 are preferably of generally identical form. Each restraint 15 is formed during the blow moulding process via which the inflatable envelope is formed from the initial parison of plastics material in the mould. The restraints 15 are thus each formed integrally from the plastics material of the airbag 2.

As illustrated most clearly in figures 3 and 4, the restraints 15 of the illustrated airbag 2 each comprise a thin-walled passage 16 formed from the plastics material and which extends across the inflatable volume 4 of the inflatable envelope 10 between the opposed layers 11, 12 of material defining the envelope, thereby interconnecting the layers 11, 12. More particularly, it will be noted that each passage 16 is formed from a pair of opposing recesses 17, each having a generally tapering and trumpet-shaped configuration which narrows towards the centre of the envelope 10. The recesses 17 are formed integrally in the plastic material of the respective layers 11, 12 and extend inwardly of the inflatable envelope, towards one another to interconnect in the centre of the inflatable volume 4 to define respective regions of the passage 16. Having regard to figures 2 and 3, it will be noted that the recesses 17, each have a generally circular configuration in cross-section.

The recesses 17, and the resulting passages 16 may be formed by various techniques. For example, they may be formed via the use of mould inserts extending across the width of the mould during the blow moulding step used to form the envelope 10 from the initial parison of plastics material. Alternatively, the two recesses 17 of each passage 16 could be formed after the blow moulding step, but before removal of the airbag from the mould and while the plastics material is still soft and warm, by inserting respective mould parts inwardly of the mould, towards its centre, the mould parts meeting in the centre and chemically joining the plastics material in the centre of the passage 16.

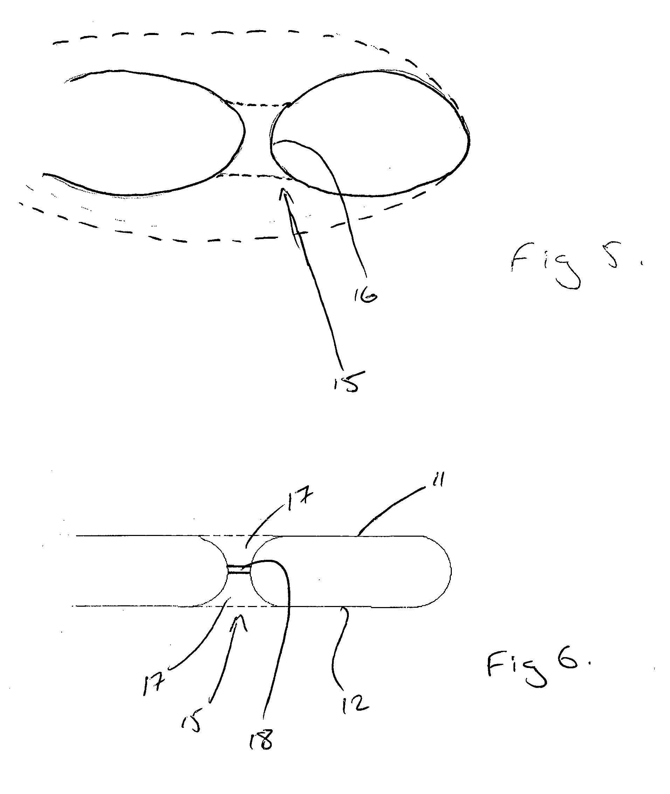

During inflation of the airbag, via the supply of a flow of inflating gas to the inflatable volume 4 from the inflator 3, the restraints 15 serve to restrain movement of the opposed layers 11, 12 of the envelope 10 away from another. This function can be seen most clearly in figure 5, where the solid lines illustrate the cross-sectional profile of the airbag upon inflation. As will be noted, the thin-walled passages 16 of each restraint 15 serve to prevent excessive or significant movement of the adjacent regions of the layers 11, 12 away from one another, effectively tethering the layers 11, 12 to one another at the location of the restraints. This is shown in figure 5 in contrast to the cross-sectional profile shown in phantom which is representative of an airbag formed without the restraints 15. Remembering that the plurality of restraints 15 are provided in spaced apart positions across the airbag, as shown in figure 2, it will thus be appreciated that the restraints 15 cooperate to prevent excessive "ballooning" of the airbag through plastic deformation upon inflation, thereby ensuring that the airbag deploys into a configuration having a sufficient coverage area to extend over the windscreen 6 and the A-pillars 7 of the motor vehicle.

Turning now to consider figure 6, there is illustrated an alternative form of restraint 15. In this arrangement, the restraint is again defined by a pair of opposing and generally trumpet-shaped recesses 17 extending inwardly from respective layers 11, 12 of the airbag material. However, in this arrangement, the recesses 17 are both blind recesses and so each terminates with a blind end inside the envelope 10. Accordingly, the recesses 17 are effectively separated from one another by a small circular region 18 of plastics material.

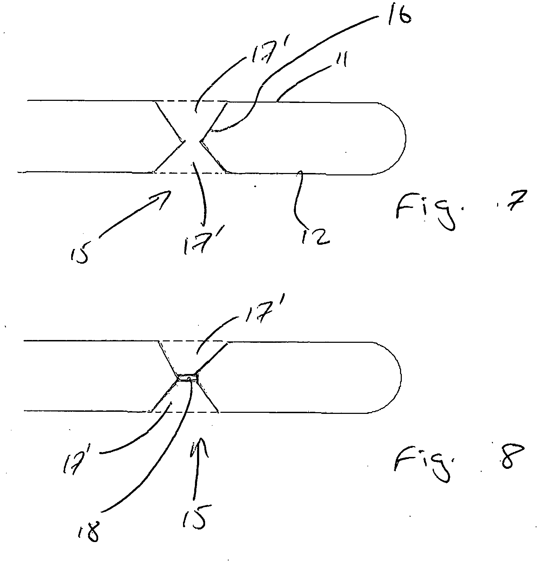

Also, it is to be appreciated that whilst the invention has been described above with reference to specific embodiments in which the recesses 17 which define the restraints 15 each have a generally trumpet-shaped configuration, other embodiments of the invention may comprise recesses of alternative configurations. For example, figure 7 shows an arrangement in which the restraints 15 are each defined by a pair of inwardly extending frustoconical recesses 17' which interconnect inside the envelope 10 to define a passage 16 having a slightly different configuration. Similarly, figure 8 shows an arrangement which represents a modification of the arrangement shown in figure 6, in which a pair of blind frustoconical recesses 17' are used to define a similarly shaped restraint having a central circular region of plastics material 18.

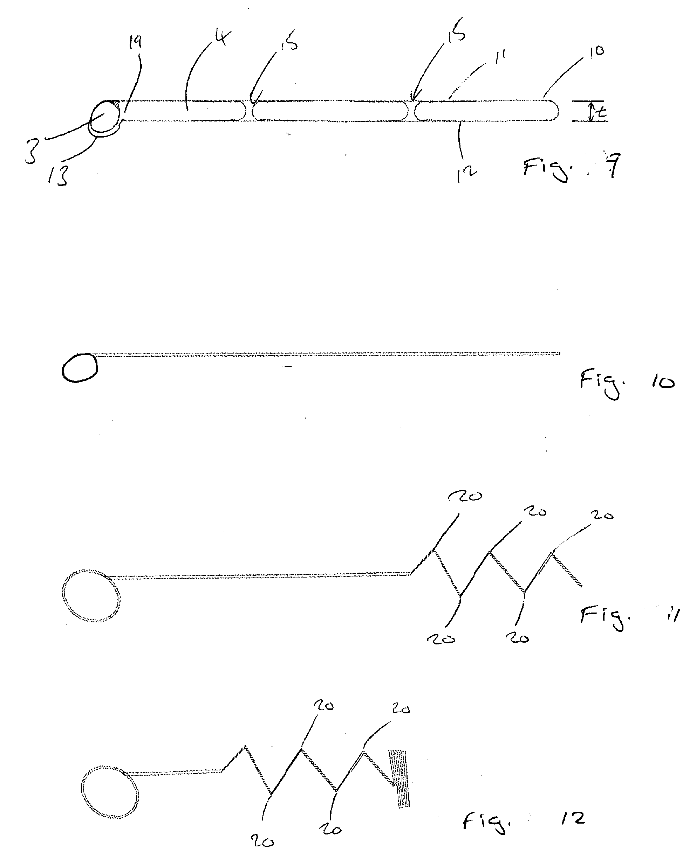

Turning now to consider figures 9 to 15, a preferred packaging method which may be used to package the above-described blow moulded airbag will now be described.

Figure 9 shows the airbag in cross-sectional view (taken along line IX-IX of figure 3), in its blow-moulded configuration prior to packaging. The airbag thus has an initial thickness t between the two plastic layers 11, 12 as defined by the size of the mould in which it was blow moulded. The airbag is also shown with the inflator 3 in position within the chamber 13.

An initial step of the preferred packaging method involves evacuating the inflatable volume 4 of the inflatable envelope 10, which may be achieved through the gas inlet opening from the chamber 13 to the inflatable volume 4, and through the access aperture 14. Preferably, the plastic material of the airbag is heated prior to and during the evacuation step, so as to soften the material. Alternatively, however, the evacuation step could be performed immediately after the airbag is removed from the mould, while the airbag is still warm and its material thus soft.

Evacuation of the inflatable volume 4 is thus effective to suck the two layers 11, 12 towards one another, thus flattening the airbag over substantially its entire extent as illustrated in figure 10. In this regard, it is to be noted that the diameter of the passages 16 of the restraints is preferably selected so as be sufficiently large to permit the thin wall of each passage to fold without the resulting folds overlying one another, which would result in a localised increase in material thickness in the region of each restraint 15 following the evacuation step.

As shown in figures 11 to 13, which show successive stages during packaging of the airbag 2, the envelope 10 of the airbag is then folded by the formation of a plurality of zig-zag folds (also commonly known as "concertina folds", "accordion folds", or "Z-folds"). As shown in figure 11, the initial zig-zag folds are formed in the region of the envelope 10 remote from the inflator 3, but as the folding progresses, similar folds are formed across substantially the entire extent of the inflatable envelope 10. As will be noted, each of the folds 20 runs along the length of the envelope 10.

The folds 20 are all preferably formed in the plastics material of the airbag whilst the material is warm and soft. This can either be done immediately after the evacuation step, whilst the material is still warm either from the blow moulding process or from the application of additional heat prior to the material prior to the evacuation step, or can be done whilst heat is again applied to the material. Also, in order to ensure that the two layers 11, 12 are held tightly against one another during the creation of the zig-zag folds, it is preferred to continue to apply a vacuum to the inflatable volume 4 of the airbag during the folding step.

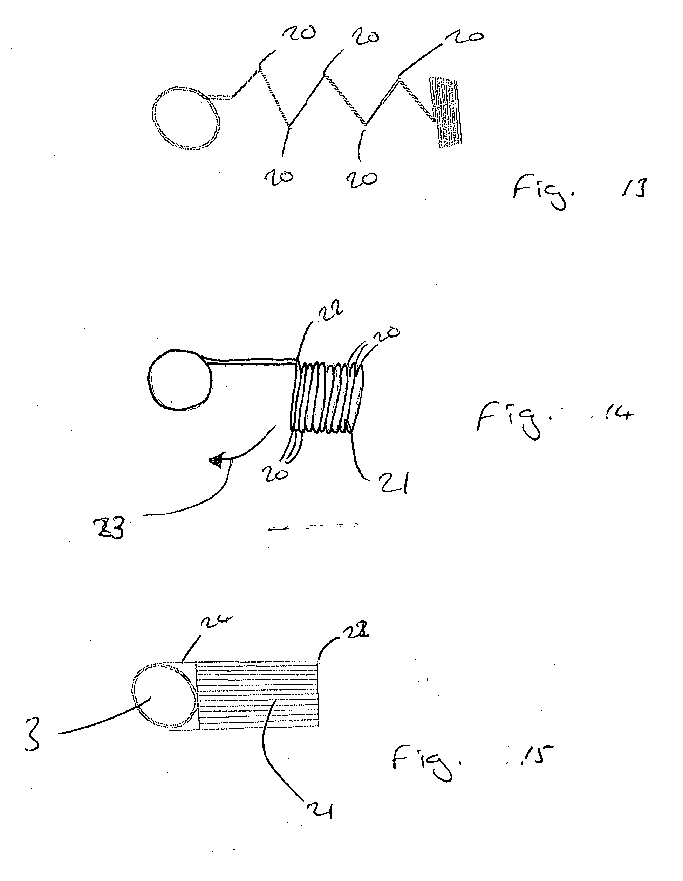

Figure 14 shows the airbag 2 after creation of the zig-zag folds 20. As will be noted, the zig-zag folds cooperate to define a tightly packed sub-package 21 of the airbag comprising the plurality of zig-zag folds 20. As a final step in packaging the airbag, the sub-package 21 is folded about a final fold 22, as illustrated by arrow 23 in figure 14 so that the sub-package becomes located adjacent the inflator 3 as illustrated in figure 15. The folded airbag may then be wrapped with a flexible wrapper 24, or optionally encased within a rupturable cover in a manner known *per se.*

It is to be noted that in preferred embodiments of the invention, none of the zig-zag fold lines 20 formed in the inflatable envelope run, pass or extend through a restraint 15. This is to prevent the creation of an irregularity in the fold lines, and also to prevent damage to the integrity of the restraints 15.

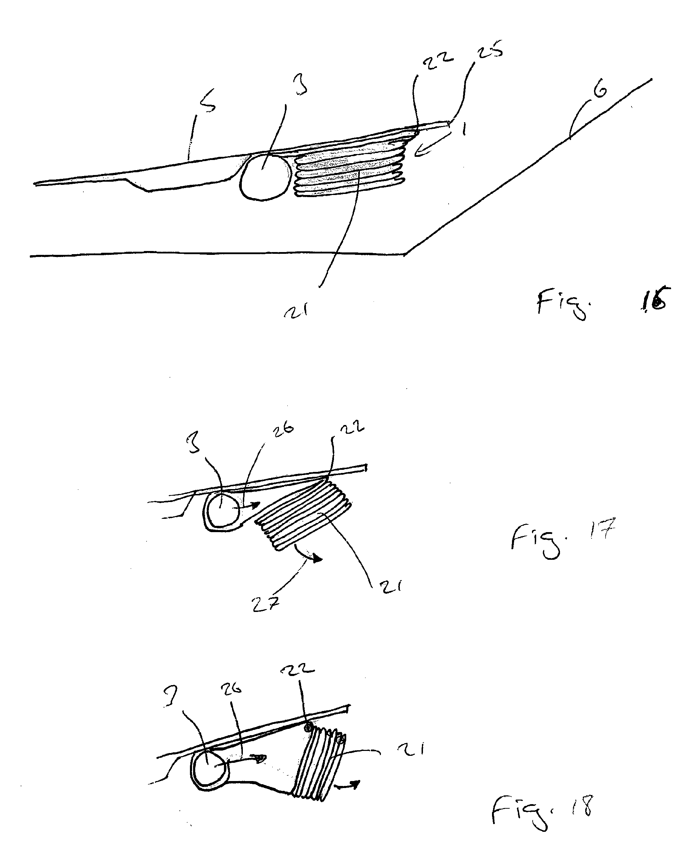

Figure 16 shows the packaged airbag mounted in position, via the inflator 3, beneath the rear part of the hood 5 of a motor vehicle. The hood 5 is shown in a raised position, similar to that illustrated in figure 1. As will be noted, the packaged airbag is mounted to the hood 5 in a position such that the final fold 22 is spaced slightly forwardly from the rear edge 25 of the hood 5, and extends generally transversely across the vehicle.

Figure 17 shows the airbag during an initial stage of deployment, immediately after initial actuation of the inflator 3. Actuation of the inflator causes a flow of inflating gas to be directed into the initially folded inflatable envelope 10. Due to the way in which the envelope is folded, the inflating gas is initially only able to flow into the region of the envelope immediately adjacent the inflator and ahead of the final fold 22. This region of the envelope is thus caused to inflate first, which urges the sub-package 21 to move pivotally away from the inflator, about an axis defined by the final fold 22, as denoted by arrow 27 in figure 27.

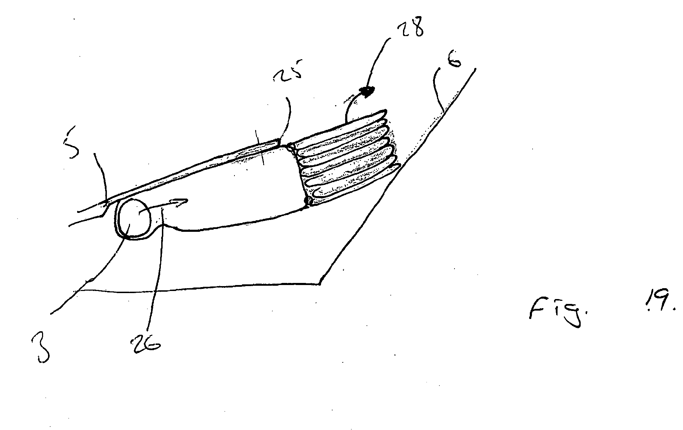

As the inflator 3 continues to direct inflating gas 26 into the inflatable envelope, the zig-zag folded sub-package 21 continues to be urged away from the inflator in a pivotal manner as shown in figure 18. The pivoting movement of the zig-zag-folded sub-package 21 continues until the package has turned through approximately 180°, as illustrated in figure 19, at which point the sub-package has been turned to a position in which it is clear of the rear edge 25 of the hood, whereupon continued inflation of the airbag causes the sub-package to unfold in a direction generally upwards across the vehicle's windscreen 6 as denoted by arrow 28.

It is to be appreciated that whilst the present invention has been described above with particular reference to an external pedestrian airbag arrangement, aspects of the invention could be applied instead to other types of airbag such, for example, inflatable curtain type airbags inside the cabin of a motor vehicle. The restraint aspect of the present invention may be particularly advantageous for use in such arrangements, where it is important to prevent excessive "ballooning" of the curtain airbag upon inflation. Also, the folded aspect of the above-described blow moulded airbag would also be advantageous in inflatable curtain arrangements, where packaging space is limited and the deployment characteristics of the curtain very particular.

Also, whilst the invention has been described above with reference to a packaging method involving the creation of a series of folds in the plastic material of the airbag envelope, it is to be appreciated that in variants of the invention the envelope could instead (or additionally) be rolled -up to form so-called roll-folds rather than zig-zag folds of the type described above. In such an arrangement, it is envisaged that the envelope will still continue to be evacuated during the rolling step.

When used in this specification and claims, the terms "comprises" and "comprising" and variations thereof mean that the specified features, steps or integers are included. The terms are not to be interpreted to exclude the presence of other features, steps or integers.

## Claims

1. An airbag (2) for a motor vehicle safety arrangement, the airbag (2) being blow-moulded from plastics material to form an envelope (10) defining an inflatable volume (4) for the receipt of inflating gas between at least two opposed layers (11,12) of said plastics material, said airbag being **characterized by** the envelope (10) having a restraint (15) formed integrally from said plastics material and extending across said inflatable volume (4) between said opposed layers (11,12), the restraint (15) being configured to restrain movement of said layers (11,12) apart from one another in the region of the restraint (15) upon inflation of the airbag (2).

2. An airbag according to claim 1, wherein said restraint (15) comprises a first recess (17) formed in the plastic material of one of said layers (11) and a second recess (17) formed in the plastic material of the other said layer (12), the recesses (17) each extending inwardly of the envelope (10) towards one another.

3. An airbag according to claim 2, wherein each said recess (17) is substantially circular in transverse cross section.

4. An airbag according to claim 2 or claim 3, wherein each said recess (17) is tapered so as to narrow towards the centre of the envelope (10).

5. An airbag according to any one of claims 2 to 4, wherein each said recess (17) is substantially frustoconical in shape.

6. An airbag according to any one of claims 2 to 4, wherein each said recess (17) is substantially trumpet-shaped.

7. An airbag according to any one of claims 1 to 6, wherein said restraint (15) defines a passage (16) extending through said envelope (10) between said layers (11,12).

8. An airbag according to claim 8, as dependent upon any one of claims 2 to 6, wherein said recesses (17) are interconnected to define respective regions of said passage (16).

9. An airbag according to any preceding claim having a plurality of said restraints (15) in spaced apart relation to one another.

10. An airbag according to any preceding claim provided in the form of a pedestrian airbag arranged for deployment over or across at least part of the windscreen (6) of a motor vehicle.

11. An airbag according to claim 10, wherein the airbag (2) is mounted beneath the rear part of the hood or bonnet (5) of the motor vehicle (1).

12. An airbag according to any preceding claim, the airbag being provided in the form of a package having at least one roll or fold (20) formed in the airbag 2, wherein none of said rolls or folds extend through a said restraint (15).

13. An airbag according to claim 12, wherein said package has a plurality of folds (20) formed in the plastic material of the envelope.

14. Method of packaging an airbag according to claim 12 or claim 13, the airbag being formed into said package via a packaging method involving the evacuation of the envelope (10) prior to the creation of said rolls or folds (20).

15. Method of packaging an airbag according to claim 14, wherein said packaging method involves the application of heat to the plastics material of the envelope during said evacuation and/or folding/rolling steps.

## Patentansprüche

1. Airbag (2) für eine Sicherheitsanordnung eines Kraftfahrzeugs, wobei der Airbag (2) aus Kunststoffmaterial blasgeformt ist, sodass er eine Hülle (10) bildet, die ein füllbares Volumen (4) zum Aufnehmen von Füllgas zwischen mindestens zwei entgegengesetzten Schichten (11, 12) des Kunststoffmaterials definiert, wobei der Airbag **dadurch gekennzeichnet ist, dass** die Hülle (10) eine Haltevorrichtung (15) aufweist, die einteilig aus dem Kunststoffmaterial ausgebildet ist und über das füllbare Volumen (4) zwischen den entgegengesetzten Schichten (11, 12) verläuft, wobei die Haltevorrichtung (15) so eingerichtet ist, dass sie die Bewegung der Schichten (11, 12) voneinander weg in dem Bereich der Haltevorrichtung (15) beim Füllen des Airbags (2) einschränkt.

2. Airbag nach Anspruch 1, wobei die Haltevorrichtung (15) eine erste Vertiefung (17) umfasst, die in dem Kunststoffmaterial von einer der Schichten (11) ausgebildet ist, und eine zweite Vertiefung (17), die in dem Kunststoffmaterial der anderen Schicht (12) ausgebildet ist, wobei die Vertiefungen (17) jeweils von der Hülle (10) aus nach innen aufeinander zu verlaufen.

3. Airbag nach Anspruch 2, wobei jede Vertiefung (17) im Querschnitt im Wesentlichen kreisförmig ist.

4. Airbag nach Anspruch 2 oder Anspruch 3, wobei sich jede Vertiefung (17) verjüngt und so zur Mitte der Hülle (10) hin schmaler wird.

5. Airbag nach einem der Ansprüche 2 bis 4, wobei jede Vertiefung (17) im Wesentlichen als Kegelstumpf geformt ist.

6. Airbag nach einem der Ansprüche 2 bis 4, wobei jede Vertiefung (17) im Wesentlichen als Trichter geformt ist.

7. Airbag nach einem der Ansprüche 1 bis 6, wobei die Haltevorrichtung (15) einen Durchgang (16) definiert, der durch die Hülle (10) zwischen den Schichten (11, 12) verläuft.

8. Airbag nach Anspruch 8, wenn er von Anspruch 2 bis 6 abhängig ist, wobei die Vertiefungen (17) miteinander verbunden sind, um jeweilige Bereiche des Durchgangs (16) zu definieren.

9. Airbag nach einem vorhergehenden Anspruch, der eine Vielzahl der Haltevorrichtungen (15) in einer zueinander beabstandeten Beziehung aufweist.

10. Airbag nach einem vorhergehenden Anspruch, der in Form eines Fußgängerairbags vorgesehen ist, der so angeordnet ist, dass er sich über zumindest einem oder quer über zumindest einen Teil der Windschutzscheibe (6) eines Kraftfahrzeugs entfaltet.

11. Airbag nach Anspruch 10, wobei der Airbag (2) unter dem hinteren Teil der Motorhaube (5) des Kraftfahrzeugs (1) montiert ist.

12. Airbag nach einem vorhergehenden Anspruch, wobei der Airbag in Form einer Packung vorgesehen ist, die mindestens eine Rolle oder Falte (20) aufweist, die in dem Airbag (2) ausgebildet ist, wobei keine der Rollen oder Falten durch eine Haltevorrichtung (15) verläuft.

13. Airbag nach Anspruch 12, wobei die Packung eine Vielzahl von Falten (20) aufweist, die in dem Kunststoffmaterial der Hülle ausgebildet sind.

14. Verfahren zum Packen eines Airbags nach Anspruch 12 oder Anspruch 13, wobei der Airbag über ein Packverfahren in die Form der Packung gebracht wird, das das Aussaugen der Luft aus der Hülle (10) vor dem Herstellen der Rollen oder Falten (20) beinhaltet.

15. Verfahren zum Packen eines Airbags nach Anspruch 14, wobei das Packverfahren das Anwenden von Wärme auf das Kunststoffmaterial der Hülle während des Schritts des Aussaugens der Luft und/oder Zusammenlegens/-rollens beinhaltet.

## Revendications

1. Airbag (2) pour un dispositif de sécurité de véhicule à moteur, l'airbag (2) étant moulé par soufflage à partir de matière plastique pour former une enveloppe (10) définissant un volume gonflable (4) destiné à recevoir du gaz de gonflage entre au moins deux couches opposées (11, 12) de ladite matière plastique, ledit airbag étant **caractérisé en ce que** l'enveloppe (10) comporte un dispositif de retenue (15) formé d'un seul tenant à partir de la matière plastique et s'étendant à travers ledit volume gonflable (4) entre lesdites couches opposées (11, 12), le dispositif de retenue (15) étant configuré pour limiter le mouvement d'écartement desdites couches (11, 12) l'une par rapport à l'autre dans la zone du dispositif de retenue (15) lors du gonflage de l'airbag (2).

2. Airbag selon la revendication 1, ledit dispositif de retenue (15) comprenant un premier creux (17) formé dans la matière plastique de l'une desdites couches (11) et un second creux (17) formé dans la matière plastique de l'autre dite couche (12), les creux (17) s'étendant chacun l'un vers l'autre vers l'intérieur de l'enveloppe (10).

3. Airbag selon la revendication 2, chaque dit creux (17) étant essentiellement circulaire en coupe transversale.

4. Airbag selon la revendication 2 ou la revendication 3, chaque dit creux (17) s'amincissant de façon à se resserrer vers le centre de l'enveloppe (10).

5. Airbag selon l'une quelconque des revendications 2 à 4, chaque dit creux (17) étant essentiellement de forme tronconique.

6. Airbag selon l'une quelconque des revendications 2 à 4, chaque dit creux (17) étant essentiellement en forme de trompette.

7. Airbag selon l'une quelconque des revendications 1 à 6, ledit dispositif de retenue (15) définissant un passage (16) s'étendant à travers ladite enveloppe (10) entre lesdites couches (11, 12).

8. Airbag selon la revendication 8, quand elle dépend de l'une quelconque des revendications 2 à 6, lesdits creux (17) étant interconnectés pour définir des zones respectives dudit passage (16).

9. Airbag selon une quelconque revendication précédente, présentant une pluralité desdits dispositifs de retenue (15) espacés les uns par rapport aux autres.

10. Airbag selon une quelconque revendication précédente, se présentant sous la forme d'un airbag pour piéton agencé pour le déploiement sur ou en travers d'au moins une partie du pare-brise (6) d'un véhicule à moteur.

11. Airbag selon la revendication 10, l'airbag (2) étant monté sous la partie arrière du capot (5) du véhicule à moteur (1).

12. Airbag selon une quelconque revendication précédente, l'airbag se présentant sous la forme d'un paquet comportant au moins un rouleau ou pli (20) formé dans l'airbag (2), aucun desdits rouleaux ou plis ne s'étendant à travers un dit dispositif de retenue (15).

13. Airbag selon la revendication 12, ledit paquet comportant une pluralité de plis (20) formés dans la matière plastique de l'enveloppe.

14. Procédé de conditionnement d'un airbag selon la revendication 12 ou la revendication 13, l'airbag étant formé pour obtenir ledit paquet par un procédé de conditionnement impliquant d'évacuer l'air de l'enveloppe (10) avant de réaliser lesdits rouleaux ou plis (20).

15. Procédé de conditionnement d'un airbag selon la revendication 14, ledit procédé de conditionnement impliquant de soumettre la matière plastique de l'enveloppe à la chaleur pendant lesdites étapes d'évacuation de l'air et/ou de pliage / d'enroulement.
